# EUROPEAN PATENT APPLICATION

(11) **EP 2 733 660 A1**
(43) Date of publication of application: **21.05.2014**
(21) Application number: 13190237.1
(22) Date of filing: 25.10.2013
(51) Int. Cl.: G06Q 40/02

(54) **Systems and methods for obtaining accountant prepared financial statement confirmation**

(30) Priority: 25.10.2012 US 201261718569 P
(71) Applicant: Capital Confirmation, Inc., Brentwood, Tennessee 37027 (US)
(72) Inventor: Fox, Charles, Nashville, TN 37221 (US)
(74) Representative: Baldwin, Mark

(57) **Abstract**

Systems and methods are provided for obtaining verified financial statements associated with a client. An accountant provides or approves financial statements associated with a client to a confirmation system via a communications network. The client provides permissions for the financial statements to the confirmation system via the communications network and identifies at least one lending institution. The confirmation system queries the database of licensed certified public accountants to determine whether the accountant is currently licensed as a certified public accountant. The confirmation system provides the financial statements to the lending institution or financial statement user upon determining that the accountant is a certified public accountant and confirming the financial information in the financial statements.

## Description

A portion of the disclosure of this patent document contains material that is subject to copyright protection. The copyright owner has no objection to the reproduction of the patent document or the patent disclosure, as it appears in the U.S. Patent and Trademark Office patent file or records, but otherwise reserves all copyright rights whatsoever.

### CROSS-REFERENCES TO RELATED APPLICATIONS

This application claims priority to and incorporates by reference herein in its entirety, U.S. Provisional Patent Serial No. 61/718,569 entitled "SYSTEMS AND METHODS FOR OBTAINING ACCOUNTANT PREPARED FINANCIAL STATEMENT CONFIRMATION" filed on October 25, 2012.

### STATEMENT REGARDING

### FEDERALLY SPONSORED RESEARCH OR DEVELOPMENT

Not Applicable

### REFERENCE TO SEQUENCE LISTING OR COMPUTER PROGRAM LISTING APPENDIX

Not Applicable

### BACKGROUND OF THE INVENTION

The present invention pertains to systems, methods and computer readable media having computer executable instructions for providing a secure electronic intermediary service between financial statement providers, their clients and the users of the financial statements (e.g. lending institutions, investors, business partners, etc.) to reduce time, resources, and costs necessary to transfer verified or third party financial statements.

When a business or individual (e.g., client) applies to borrow money from a lending institution (e.g., a bank), the lending institution typically requires one or more financial statements from the business. The borrower (i.e. the Client) must typically provide financial statements such as a balance sheet, a tax return, and an income statement to the lending institution. Items on the financial statements include, but are not limited to: assets, debt, receivables, payables, investments and transaction details. These financial statements may be but are not necessarily audited, compiled, reviewed and/or prepared financial statements by the financial statement providers which can include Certified Public Accounting Firms, Chartered Accountants, and Tax Preparers. The conventional practice is for the lender to receive financial statements prepared by a certified public accountant (CPA) in the relevant jurisdiction from a principal/partner at the business directly.

The conventional approach presents several problems. The financial statements are provided to the financial statement users (i.e., lending institutions) by the client and do not come directly from the financial statement providers to the financial statement users and because financial statement confirmation is a time and resource intensive process, the lending institution may not confirm the accuracy and/or validity of the financial statements with the CPA that generated the financial statements. This creates opportunities for an unscrupulous client (e.g., borrower, individual or company) to fabricate the financial statements while either signing the name of a legitimate financial statement provider (e.g., CPA) or altering the information in the financial statements without the financial statement provider's knowledge and then providing those misleading and falsified financial statements to the financial statement users. Also, the lending institution may not verify the license status or lack of a valid license of the individual CPA, CPA firm, or entity purporting to be a CPA firm that generated the financial statements. Thus, the financial statement provider may be operating on a fake license, an expired license, or an entirely fabricated license which can, for example, cause problems with loan insurance payouts if the resulting loan goes into default.

Financial statement users such as lending institutions vary in how and if they confirm financial statement information, though larger lending institutions have one or more centers devoted solely to processing financial statement information. Additional costs are incurred when the employees of the financial statement user work overtime and/or employ temporary staffing to meet the demand needed to process the financial statement information. Further, manually confirming the information contained in the financial statements and the validity of the financial statement provider takes a significant amount of time (e.g., a week or more) which results in lost time and revenue to the lending institution and a delay in obtaining a loan to the business (i.e., client). Financial statement users such as investors may invest in businesses or in people based on their belief that the financial statements provided by the client are legitimate and that they were created by an appropriately certified and/or licensed individual and/or firm.

### BRIEF SUMMARY OF THE INVENTION

According to one aspect of the present invention, a method is provided for confirming the license status and identity of a purported financial statement provider (i.e., certified public accountant (CPA), CPA firm, or other such entity) preparing financial statements for the client which is in turn provided to a financial statement user such as a lending institution on behalf of a business or individual applying for a loan. The financial statements must be provided to the lending institution by the business (i.e., client) applying for a loan according to existing financial regulations. Because financial statements may only be released by the business, the confirmation system allows financial statements provided from a financial statement provider to be provided to a financial statement user unaltered under permissions set by the client and with approval by the client via the confirmation system. In some embodiments, the financial statement provider (e.g., accountant) can verify the veracity of the financial statements before they are ultimately provided to the financial statement user (e.g., lending institution) either by providing the financial statements to the confirmation system, or by approving the financial statements after they are uploaded to the confirmation system by the client. Optionally, the method includes confirming financial information in financial statements submitted to a lending institution by a business applying for a loan from the lending institution as described in U.S. Patent Nos. 7,383,232; 7,831,488; and 8,442,880, all of which are incorporated herein by reference in their entirety.

In one aspect, a method of providing a financial statement associated with a client to a financial statement user includes receiving at a server of a confirmation system, via a communications network, a financial statement having financial information associated with the client. The received financial statement is stored in a computer database of the confirmation system. The server of the confirmation system receives, from the client via the communications network, permissions associated with the stored financial statement. The stored financial statement is provided from the computer database of the confirmation system to the financial statement user as a function of the permissions associated with the stored financial statement.

In another aspect, a computer readable storage media has computer executable instruction modules stored therein operable to provide a financial statement associated with a client to a financial statement user. The server of a confirmation system receives, via a communications network, a financial statement having financial information associated with the client. The received financial statement is stored in a computer database of the confirmation system. The server of the confirmation system receives, from the client via the communications network, permissions associated with the stored financial statement. The stored financial statement is provided from the computer database of the confirmation system to the financial statement user as a function of the permissions associated with the stored financial statement.

### BRIEF DESCRIPTION OF THE SEVERAL VIEWS OF THE DRAWINGS

Fig. 1 illustrates the architecture of the various systems interacting with the confirmation system according to one embodiment of the present invention.
Fig. la illustrates one embodiment of the architecture of the confirmation system according to the principles of the present invention.
Fig. lb illustrates another embodiment of the architecture of the confirmation system according to the principles of the present invention.
Fig. 2 is a high-level block and process flow diagram of one embodiment of a system and method for providing a financial statement to a financial statement user.
Fig. 3 is a high-level block and process flow diagram of another embodiment of a system and method for providing a financial statement to a financial statement user.
Fig. 4 is a high-level block and process flow diagram of another embodiment of a system and method for providing a financial statement to a financial statement user.
Fig. 5 is a high-level block and process flow diagram of another embodiment of a system and method for providing a financial statement to a financial statement user.

### DETAILED DESCRIPTION OF THE INVENTION

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. Like numbers refer to like elements throughout.

The present invention is described below with reference to block diagrams and flowchart illustrations of methods, apparatus (i.e., systems) and computer program products (i.e., computer executable instruction modules) according to an embodiment of the invention. It will be understood that each block of the block diagrams and the flowchart illustrations, and combinations of blocks in the block diagrams and combinations of the blocks in the flowchart illustrations, can be implemented by computer program instructions. These computer program instructions may be loaded onto a general purpose computer, special purpose computer, or other programmable data processing apparatus to produce a machine, such that the instructions that execute on the computer or other programmable data processing apparatus create means for implementing the functions specified in the block or blocks.

These computer program instructions may also be stored in a computer-readable memory that can direct a computer or other programmable data processing apparatus to function in a particular manner, such that the instructions stored in the computer-readable memory produce an article of manufacture including instructions which implement the function specified in the block or blocks. The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions specified in the block or blocks of the flowchart, or block or blocks of the diagrams.

Accordingly, blocks of the block diagrams and the flowchart illustrations support combinations of means for performing the specified functions, combinations of steps for performing the specified functions, and/or program instructions or modules for performing the specified functions. It will also be understood that each block of the block diagrams and the flowchart illustrations, and combinations of the respective blocks, can be implemented by special purpose hardware-based computer systems which perform the specified functions or steps, or combinations of special purpose hardware and computer instructions.

Further, the terms "lending institution", "accountant", and "client" are used based on the context, and may refer to a computer system operated by the entity, a user, a person affiliated with the entity operating the computer system, or the entity in general. The appropriate meaning to be applied should be clear from the context. Further, although the principles of the present invention are illustrated using an "accountant", the invention is not limited to an accountant. The "accountant" may be a bookkeeper, accounting firm, or accountants internal to the business identified by the financial statements. Further, as seen below, the "accountant" is intended to include a purported accountant or bookkeeper. The financial statement information to be confirmed is not limited to accounting parameters or accounting functions. Similarly, though the illustrative embodiments are described in terms of a "bank" as one example of a lending institution requesting financial statement confirmation, other types of financial institutions, non-financial institutions, charities, non-governmental organizations, agencies, or governmental organizations as users requiring confirmation responses are possible within the meaning of the term lending institution. Further, a "bank", "lender", or "lending institution" can also mean an investor, investment firm, equity group, or other user of the financial statements (i.e., financial statement user) who takes action based on the financial statements. Further, the "client" may be a business, an individual or other borrower or a seller of equity in a business.

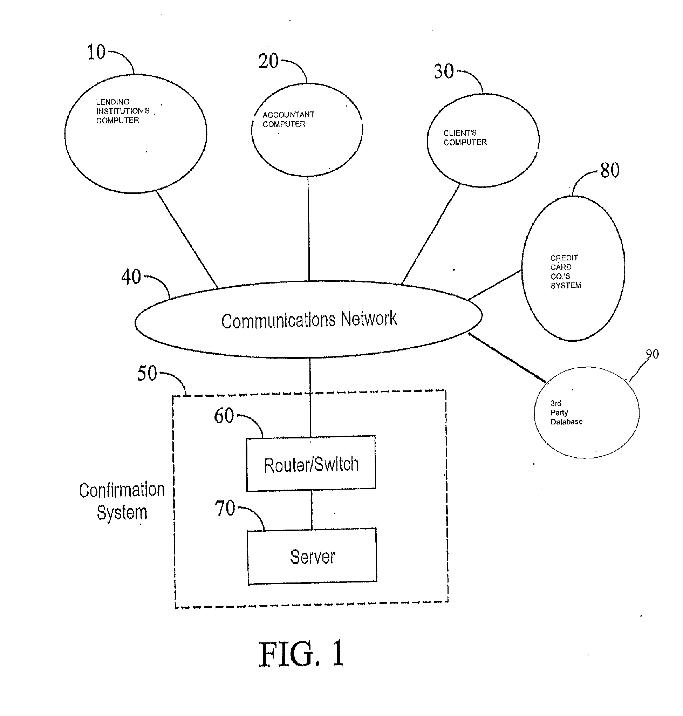

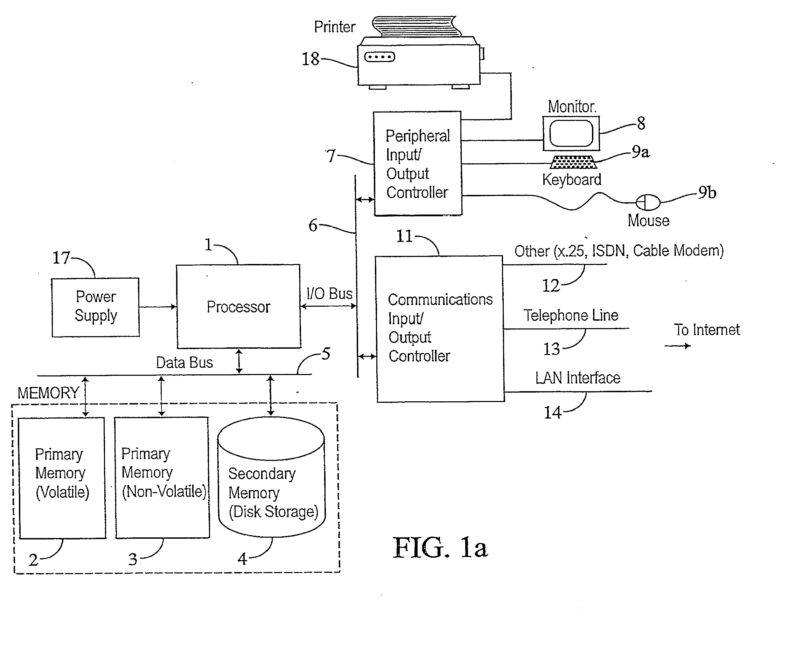

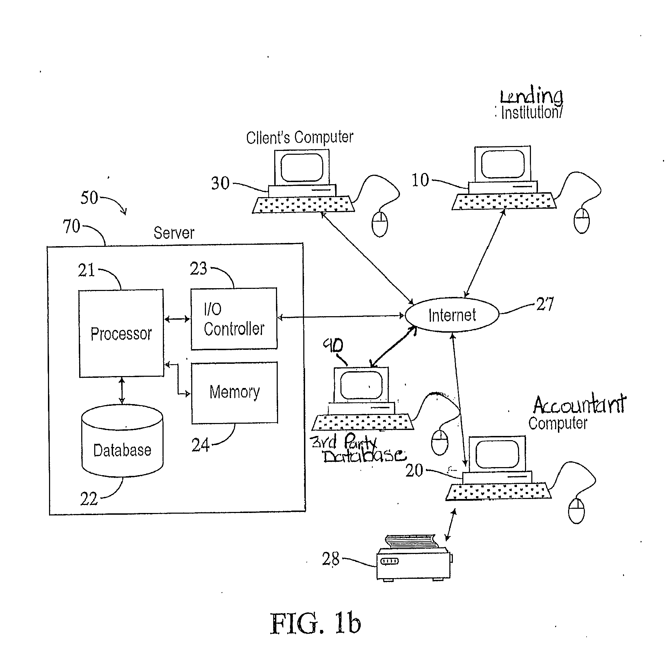

Fig. 1 illustrates one embodiment of the architecture and typical user entities that may interact with a confirmation system 50 in order to provide, to a financial statement user, financial statements generated by an accountant or verified by the accountant. As seen in Fig. 1, the confirmation system 50 includes a server 70 functionally coupled to a communications network 40 via a router/switch 60 or other type of network interface. The entities accessing and interacting with the confirmation system 50 include a lending institution computer 10 (i.e., a financial statement user), an accountant computer 20, and a client computer 30 according to one embodiment of the present invention. Third-party database 90 is coupled to the confirmation system 50 by way of the communications network 40. In one embodiment, the third-party database is a database identifying licensed certified public accountants (CPAs).

The accountant 20 is typically a CPA preparing financial statements or keeping books for the client 30. The client 30 is the individual or entity (e.g., business) that uses the CPA to prepare financial statements and/or tax returns, including, but not limited to, any business, corporation, non-profit organization, government department or any other entity whose financial statements are being sought by the financial statement user (e.g., lending institution or investor).

In one embodiment of the present invention, computing devices of all of these user entities have access to the confirmation system 50 via the communications network 40, which can be the Internet, a local area network, a wide area network or a conglomeration of various types of communications networks. The confirmation system 50 may be operated by an independent service provider or may be affiliated with a lending institution or accountant. In some embodiments, certain users accessing the confirmation system may be charged certain fees that may be paid electronically through a credit card company 80. Alternative embodiments are possible, such as directly debiting an account associated with the service purchaser. If paid for by a credit card, the credit card company 80 would interact with the system 50 via the communications network 40. Alternatively, the confirmation system 50 can be a client application embedded in one of the individual user entity's existing system. For example, the confirmation system 50 can be integrated into a banking system run by the lending institution 10. In that way, for the bank user, the financial statement verification and permissions release is accomplished through internal communications between different application modules.

Although Fig. 1 illustrates the router/switch 60 as being a separate entity from the server 70, in other embodiments, the router/switch 60 functionality may be integrated in the communications network 40 or incorporated in part into the server 70. Thus, in various embodiments, the confirmation system 50 may comprise a server 70 but itself without a separate router/switch 60.

One embodiment of the server for executing software providing confirmation servers is shown in Fig. 1a. Alternatively, or in addition, Fig. 1a illustrates a one embodiment of a client computer 30, accountant computer 20, third-party database 90, or lending institution computer 10 that may execute instructions for providing the financial statement to the financial statement user.

Referring to Fig. 1a, one embodiment of the server 70 is illustrated that may include a computing device used to practice aspects of the present invention. The same computing device architecture could apply to either of the accountant or lending institution (i.e., financial statement user) computer if the computer executable instructions for providing financial statements to the financial statement user are executed on those computing devices (e.g., computers). In Fig. 1a, a processor 1, such as a microprocessor, executes computer executable instructions for carrying out the defined steps of the method of providing financial statements to financial statement users. The processor 1 receives power from a power supply 17 that also provides power to the other components of the computing device as necessary. The processor 1 communicates using a data bus 5 that is typically 16 or 32 bits wide (e.g., in parallel). Typical applications involve the processor 1 receiving inputs, such as user input in the form of various numerical identifiers that are stored in the memory using the data bus 5. The data bus 5 is also used to convey data and program instructions between the processor 1 and memory. In one embodiment, the memory is primary memory 2. The primary memory 2 may be RAM or other forms of memory which retain their contents only during operation (i.e., while receiving power from the power supply 17), or the primary memory may be non-volatile primary memory 3, such as ROM, EPROM, EEPROM, FLASH, or other types of memory that retain the memory contents at all times (i.e., when not receiving power from the power supply 17). In one embodiment, the memory could also be secondary memory 4, such as disk storage, that stores large amount of data. In some embodiments, the disk storage may communicate with the processor 1 using an I/O bus 6 instead of a dedicated bus (not shown). The secondary memory may be a floppy disk, hard disk, compact disk, DVD, or any other type of mass storage type known to those skilled in the computer arts. The memory may also be a hybrid memory including primary and secondary memory having portions that is volatile and nonvolatile.

The processor 1 also communicates with various peripherals or external devices using an I/O bus 6. In one embodiment, a peripheral I/O controller 7 is used to provide standard interfaces, such as RS-232, RS422, DIN, USB, or other interfaces as appropriate to interface various input/output devices. Input/output devices may include local printers 18, a monitor 8, a keyboard 9a, a mouse 9b or other typical pointing devices (e.g., roller ball, track pad, joystick, etc.) that are not shown.

The processor 1 may also communicates using a communications I/O controller 11 with external communication networks, and may use a variety of interfaces such as data communication oriented protocols 12 such as X.25, ISDN, DSL, cable modems, etc. The communications controller 11 may also incorporate a modem (not shown) for interfacing and communicating with a standard telephone line 13. Finally, the communications I/O controller 11 may incorporate an Ethernet interface 14 for communicating over a LAN. Any of these interfaces may be used to access the Internet, intranets, LANs, or other data communication facilities and networks. The communications 10 is used by the processor 1 to send data, such as account data or other data including an identification of a client, accountant, or financial statement user, an approval of a financial statement, or permissions for a financial statement.

One alternative embodiment of a processing system for a computing device than may be used is shown in Fig. 1b. In this embodiment, the confirmation system 50 includes a server 70 communicating with a client computer 30, lending institution computer 10 (i.e., financial statement user computer), and the accountant computer 20. In other embodiments, only a subset of the computers may be involved. The server 70 typically includes a processor 21 that communicates with a computer database 22, which can be viewed as a form of secondary memory and stores various confirmation requests, both pending and completed, as well as primary memory 24. The computer database 22 may be integral with or separate from the server 70, and one or both may be implemented in virtual machines. The processor 21 also communicates with external devices using an l/O controller 23 that may interface with the Internet 27.

In one embodiment, each of the client computer 30, lending institution computer 10 (i.e., financial statement user computer), and the accountant computer 20 incorporate a browser, such as the Microsoft Explorer" or Google Chrome executing on a Windows 8™, Linux, or Apple operating system. The server 70 may utilize standard Internet protocols, such as HTTP, or secure encryption protocols, like HTTPS or other types of both secure and non-secure communication protocols as is known in the art, for communicating data, such as financial statements, financial statement approvals, usernames and passwords, identifications of clients, accountants, and financial statement users, and permissions for financial statements. Further, the any of the computing devices may include a local or network printer 28 for printing reports in order to provide a written record.

Those skilled in the art of computer architecture and data networking will realize that many other alternatives and architectures are possible and can be used to practice the aspects of the present invention. The embodiments illustrated in Figs. la and 1b can be modified in different ways and be within the scope of the present invention as claimed.

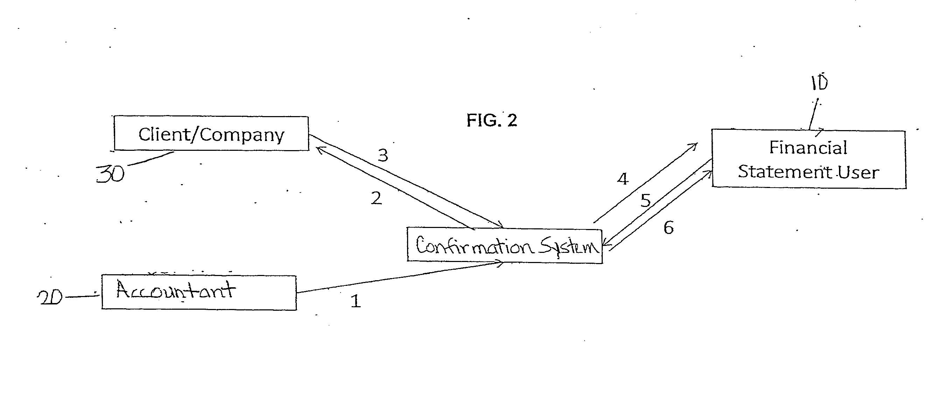

Referring to Fig. 2, a high-level block and process flow diagram of the interaction between the various aforementioned entities is demonstrated with exemplary steps for a first embodiment of the present invention. In step 1, the accountant 20 uploads the client's (e.g., business or potential borrower) financial statement(s) to a server of the confirmation system 50. The server of the confirmation system 50 receives the financial statement having financial information associated with the client 30 and stores the received financial statement in a computer database of the confirmation system 50. The financial statements may include tax returns, audited financial statements, reviews, and/or compilations including balance sheets and income statements. Assuming that the accountant 20 has a prior valid registration which signifies that the accountant 20 is properly licensed in the appropriate jurisdiction and registered with the confirmation system 50, step 1 includes logging in to the confirmation system 50 using a pre-established username and password. If the accountant 20 does not have a prior valid registration with the confirmation system 50, step 1 includes verifying that the accountant and/or the accounting firm is properly licensed to prepare the corresponding financial statement documents, and creating a username and password associated with the accountant 20. Verifying that the accountant is properly licensed to prepare financial statements includes querying a third party database for a record corresponding to the accountant.

Once the accountant 20 has logged into the confirmation system 50 with a valid username and password, the accountant 20 creates a profile for or identifies the client or company 30. As described above, the accountant 20 then uploads the financial statement(s) for the client 30 the confirmation system 50.

In step 2, in response to receiving the financial statement at the server of the confirmation system 50 and an identification of the client 30 from the accountant 20, the confirmation system 50 sends a notification to the client 30 via the communications network. If the client 30 is not already registered, the confirmation system 50 sends notification to the client 30 of their need to register. If the client 30 is already registered, the confirmation system 50 sends a notification to the client 30 that financial statements available for review that were uploaded by the accountant 20.

In step 3, the client 30 sets permissions for the financial statements. The permissions can include view, print, and/or download, and the length of time (i.e., time limit) or an expiration date for the permissions, and the entities given permission to access the financial statements stored at the confirmation system 50. Assuming that the client 30 has a prior valid registration with the confirmation system 50, step 2 includes logging in using a pre-established username and password for the client 30. If the client 30 does not have a prior valid registration with the confirmation system 50, step 1 includes creating a username and password associated with the client 30. Once the client 30 has logged into the confirmation system 50 with a valid username and password, the client 30 selects one or a group of financial statements. The client 30 then creates, identifies, or selects one or a group of lending institutions to associate with the selected financial statements. The client 30 can then set permissions for each selected lending institution with respect to each financial statement. The server of the confirmation system 50 receives the permissions associated with the stored financial statement and stores the received permissions in an association with the financial statement.

In step 4, if a lending institution 10 (i.e., financial statement user) selected in step 3 by the client 30 is not already registered with the confirmation system 50, the confirmation system 50 sends a notification to the unregistered lending institution 10 (or lending institutions) of their need to register with the confirmation system 50. If the lending institution 10 is already registered with the confirmation system 50, then the confirmation system 50 sends a notification to the lending institution 10 that the client 30 has designated financial statements for review, access, or download by the lending institution 10. The notification indicates the availability of the financial statement to the financial statement user 10.

In step 5, assuming that the lending institution 10 has a prior valid registration with the confirmation system 50, step 4 includes logging in using a pre-established username and password for the lending institution 10. If the lending institution 10 does not have a prior valid registration with the confirmation system 50, step 4 includes creating a username and password associated with the lending institution 10. After the lending institution 10 has logged into the confirmation system 50 with a valid username and password, the lending institution can perform actions with respect to the financial statements stored in the confirmation system 50 that are permitted by the permissions set by the client 30 in step 3 such as downloading and reviewing the financial statements. The permissions provided by the client 30 to the confirmation system 50 via the communications network are received and stored in association with the financial statement at the server of the confirmation system 50.

In step 6, the confirmation system 50 provides the lending institution 10 with the financial statements associated with the client 30 as a function of the permissions provided by the client 30 in response to the request from the lending institution 10 in step 5.

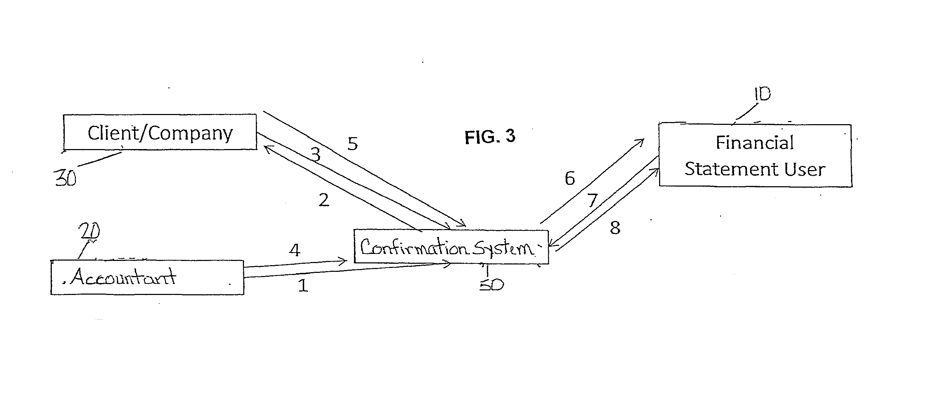

Alternative embodiments and processes of the present invention are illustrated in Figs. 3, 4, and 5 and will now be described assuming that the parties (i.e., the accountant 20, the client 30, and the lending institution 10) are each registered with the confirmation system 50 such that they have pre-established usernames and passwords for logging into the confirmation system 50. If a party is not registered with the confirmation system 50, then the party may complete the process as described above for obtaining a pre-established username and password for logging into the confirmation system 50.

Referring to Fig. 3, in step 1, the accountant 20 logs into the confirmation system 50 and creates or identifies the client or business 30. In step 2, the confirmation system 50 sends a notification to the client 30 that the accountant 20 has requested to upload financial statements. In step 3, the client 30 logs into the confirmation system 50 and approves the accountant's request to upload financial statements. In step 4, the accountant logs into the confirmation system 50 and uploads the financial statements. Optionally, the confirmation system 50 may notify the client 30 that the financial statements have been uploaded by the accountant 20 (e.g., via email). In step 5, after the client 30 has logged into the confirmation system 50 with a valid username and password, the client 30 selects one or a group of financial statements. The client 30 then creates, identifies, or selects one or a group of lending institutions to associate with the selected financial statements. The client 30 can then set permissions for each selected lending institution with respect to each financial statement. In step 6, the confirmation system 50 sends a notification to the lending institution 10 that financial statements are ready to be viewed, accessed, or downloaded by the lending institution 10 based on the permissions set by the client 30 in step 5. In step 7, the lending institution 10 logs into the confirmation system 50 and performs actions with respect to the financial statements permitted by the permission set by the client 30 in step 5. In step 8, the confirmation system 50 provides the lending institution 10 with the client's financial statements in response to the request by the lending institution 10 in step 7.

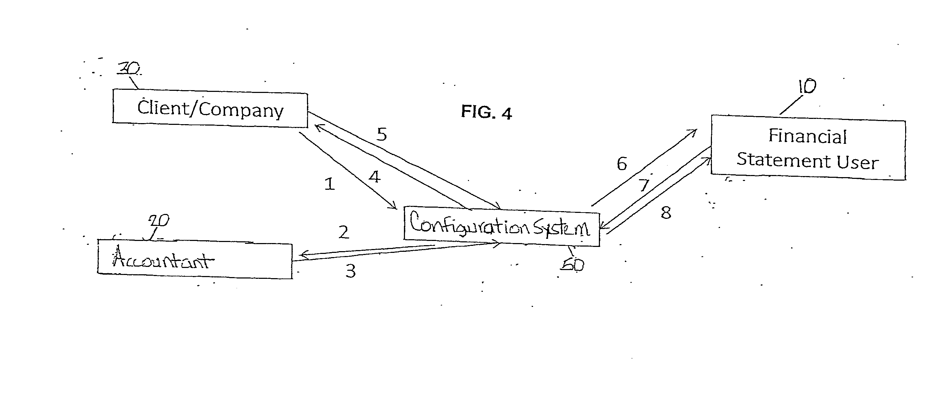

Referring to Fig. 4, in step 1, the client 30 logs into the confirmation system 50 and creates a profile or account for or identifies the accountant 20. In step 2, the confirmation system 50 notifies the accountant 20 that the client 30 has identified the accountants 24 upload of financial statements. In step 3, the accountant 20 logs in the confirmation system 50, selects the client 30, and uploads financial statements associated with the client 30. In step 4, the confirmation system 50 notifies the client 30 of the available financial statements uploaded by the accountant 20. In step 5, the client 30 logs into the confirmation system 50 selects one or a group of the uploaded financial statements, creates, identifies, or selects one or a group of lending institutions 10, and sets permissions for each lending institution 10 with respect to each financial statement. In step 6, the lending institution 10 is notified by the confirmation system 50 that the client's financial statements are available for access by the lending institution 10. In step 7, the lending institution 10 logs into the confirmation system 50 and performs permitted actions with respect to the financial statements. In step 8, the confirmation system 50 provides the lending institution 10 with the clients financial statements based on the permissions and the request by the lending institution 10 in step 7.

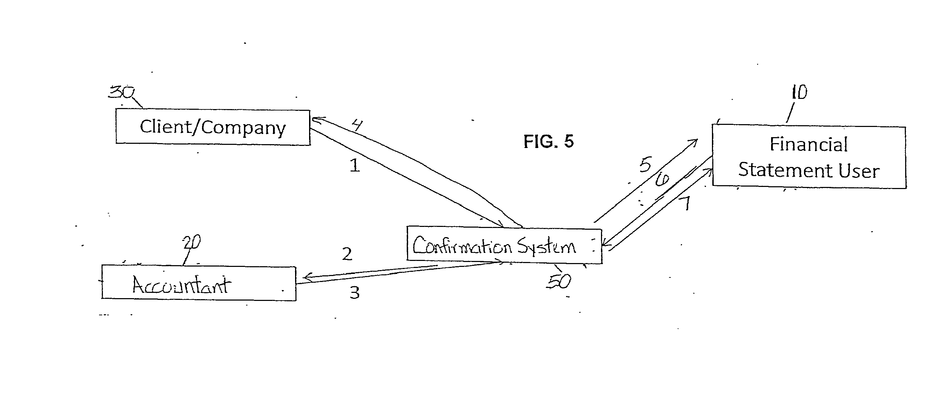

Referring to Fig. 5, in step 1, the client 30 logs into the confirmation system 50, identifies one or more accountants 20, identifies one or more lending institutions 10, and sets permissions for each of the lending institutions 10. In step 2, the accountant 20 is notified by the confirmation system 50 that financial statements are requested by the client 30 from the accountant 20. In step 3, the accountant 20 logs into the confirmation system 50 and uploads financial statements associated with the client 30 to the confirmation system 50. In step 4, the confirmation system 50 notifies the client 30 that the financial statements were uploaded by the accountant 20. In step 5, the confirmation system notifies the lending institution 10 that the financial statements associated with the client 30 are available. In step 6, the lending institution 10 logs into the confirmation system 50 and performs actions on the financial statements authorized (i.e., permitted) by the client 30 in step 1. In step 7, the confirmation system 50 provides the financial statements to the lending institution 10 in response to requests from the lending institution 10 in step 6 is allowed by the permissions set by the client 30 in step 1.

In some embodiments, the confirmation system 50 analyzes the financial statements for financial information, and obtains confirmations of the financial information contained in the financial statements from third parties or counterparties to the financial information in the financial statements as disclosed in U.S. Patent Nos. 7,383,232; 7,831,488; and 8,442,880, all of which are incorporated herein by reference in their entirety.

In some embodiments, the financial statements may be uploaded by the client 30 and verified or confirmed by the accountant 20. The confirmation system 50 receives the financial statement having financial information associated with the client from the client 30, and an identification of the accountant 20 associated with the client 30. The confirmation system 50 then provides, via the communications network, a notification to the accountant 20. The confirmation system 50 receives a confirmation of the financial information in the financial statement form the accountant 20 via the communications network when the accountant 20 logs on to the confirmation system 50 and verifies the financial information in the financial statement.

In some embodiments, the confirmation system 50 maintains a database (or accesses a third-party database) of licensed CPAs. The confirmation system 50 checks the status of the accountant 20 against the database of licensed CPAs (i.e., queries the database of licensed CPAs to determine whether the accountant 20 is a currently licensed certified public accountant). If the confirmation system 50 determines that the accountant 20 is not licensed or has an expired license, then the confirmation system 50 may notify the client 30 and/or the lending institution 10 that the accountant 20 is not licensed. The confirmation system 50 may further refuse to confirm the financial information in the financial statements provided by the accountant 20. In other embodiments, the database of licensed CPAs is maintained in a third-party database 90 external to the confirmation system 50. Similarly, confirmation system 50 checks the third-party database 90 to determine whether the accountant 20 is a licensed CPA.

A computer or computing device such as described herein has one or more processors or processing units, system memory, and some form of computer readable media. By way of example and not limitation, computer readable media comprise computer storage media and communication media. Computer storage media include volatile and nonvolatile, removable and non-removable media implemented in any method or technology for storage of information such as computer readable instructions, data structures, program modules or other data. Communication media typically embody computer readable instructions, data structures, program modules, or other data in a modulated data signal such as a carrier wave or other transport mechanism and include any information delivery media. Combinations of any of the above are also included within the scope of computer readable media.

The computer or computing device may operate in a networked environment using logical connections to one or more remote computers, such as a remote computer. Although described in connection with an exemplary computing system environment, embodiments of the invention are operational with numerous other general purpose or special purpose computing system environments or configurations. The computing system environment is not intended to suggest any limitation as to the scope of use or functionality of any aspect of the invention. Moreover, the computing system environment should not be interpreted as having any dependency or requirement relating to any one or combination of components illustrated in the exemplary operating environment. Examples of well known computing systems, environments, and/or configurations that may be suitable for use with aspects of the invention include, but are not limited to, personal computers, server computers, hand-held or laptop devices, multiprocessor systems, microprocessor-based systems, set top boxes, programmable consumer electronics, mobile telephones, network PCs, minicomputers, interactive video game consoles, mainframe computers, distributed computing environments that include any of the above systems or devices, and the like.

Embodiments of the invention may be described in the general context of computer-executable instructions, such as program modules, executed by one or more computers or other devices. The computer-executable instructions may be organized into one or more computer-executable components or modules. Generally, program modules include, but are not limited to, routines, programs, objects, components, and data structures that perform particular tasks or implement particular abstract data types. Aspects of the invention may be implemented with any number and organization of such components or modules. For example, aspects of the invention are not limited to the specific computer-executable instructions or the specific components or modules illustrated in the figures and described herein. Other embodiments of the invention may include different computer-executable instructions or components having more or less functionality than illustrated and described herein. Aspects of the invention may also be practiced in distributed computing environments where tasks are performed by remote processing devices that are linked through a communications network (e.g., a local area network and/or the Internet). In a distributed computing environment, program modules may be located in both local and remote computer readable storage media including memory storage devices.

The order of execution or performance of the operations in embodiments of the invention illustrated and described herein is not essential, unless otherwise specified. That is, the operations may be performed in any order, unless otherwise specified, and embodiments of the invention may include additional or fewer operations than those disclosed herein. For example, it is contemplated that executing or performing a particular operation before, contemporaneously with, or after another operation is within the scope of aspects of the invention.

When introducing elements of aspects of the invention or the embodiments thereof, the articles "a," "an," "the," and "said" are intended to mean that there are one or more of the elements. The terms "comprising," "including," and "having" are intended to be inclusive and mean that there may be additional elements other than the listed elements.

Having described aspects of the invention in detail, it will be apparent that modifications and variations are possible without departing from the scope of aspects of the invention as defined in the appended claims. As various changes could be made in the above constructions, products, and methods without departing from the scope of aspects of the invention, it is intended that all matter contained in the above description and shown in the accompanying drawings shall be interpreted as illustrative and not in a limiting sense.

It will be understood by those of skill in the art that information and signals may be represented using any of a variety of different technologies and techniques (e.g., data, instructions, commands, information, signals, bits, symbols, and chips may be represented by voltages, currents, electromagnetic waves, magnetic fields or particles, optical fields or particles, or any combination thereof). Likewise, the various illustrative logical blocks, modules, circuits, and algorithm steps described herein may be implemented as electronic hardware, computer software, or combinations of both, depending on the application and functionality. Moreover, the various logical blocks, modules, circuits, and controllers described herein may be implemented or performed with a general purpose processor (e.g., microprocessor, conventional processor, controller, microcontroller, state machine or combination of computing devices), a digital signal processor ("DSP"), an application specific integrated circuit ("ASIC"), a field programmable gate array ("FPGA") or other programmable logic device, discrete gate or transistor logic, discrete hardware components, or any combination thereof designed to perform the functions described herein. Similarly, steps of a method or process described herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. Although embodiments of the present invention have been described in detail, it will be understood by those skilled in the art that various modifications can be made therein without departing from the spirit and scope of the invention as set forth in the appended claims.

Thus, although there have been described particular embodiments of the present invention of a new and useful Systems and Methods for Obtaining an Accountant Prepared Financial Statement Confirmation, it is not intended that such references be construed as limitations upon the scope of this invention except as set forth in the following claims.

## Claims

1. A computer readable storage media having computer executable instruction modules stored therein that are operable to provide a financial statement associated with a client to a financial statement user by performing the operational steps of:
receiving at a server of a confirmation system, via a communications network, a financial statement having financial information associated with the client;
storing the received financial statement in a computer database of the confirmation system;
receiving at the server of the confirmation system from the client, via the communications network, permissions associated with the stored financial statement; and
providing the stored financial statement from the computer database of the confirmation system to the financial statement user as a function of the permissions associated with the stored financial statement.

2. The computer readable storage media of claim 1, wherein:
the operation of receiving at the server of the confirmation system, via the communications network, the financial statement having financial information associated with the client comprises receiving at the server of the confirmation system, via the communications network, the financial statement having financial information associated with the client from an accountant associated with the client and receiving an identification of the client from the accountant at the server of the confirmation system; and
the computer executable instruction modules are further operable to perform the step of providing a notification from the server of the confirmation system to the client, via the communications network, in response to receiving the identification of the client at the server.

3. The computer readable storage media of claim 1, wherein the operation of receiving at the server of the confirmation system, via the communications network, the financial statement having financial information associated with the client comprises:
receiving at the server of the confirmation system, via the communications network, the financial statement having financial information associated with the client from the client;
receiving at the server of the confirmation system from the client, via the communications network, an identification of an accountant associated with the client;
providing a notification to the identified accountant from the server of the confirmation system via the communications network; and
receiving a confirmation of the financial information in the financial statement from the accountant at the server of the confirmation system via the communications network.

4. The computer readable storage media of claim 1, 2 or 3, wherein:
the operation of receiving at the server of the confirmation system from the client, via the communications network, permissions associated with the stored financial statement comprises receiving an identification of the financial statement user; and
the computer executable instruction modules are further operable to perform the steps of providing a notification from the server of the confirmation system to the identified financial statement user via the communications network in response to receiving the permissions at the server of the confirmation system, said notification indicating the availability of the financial statement to the identified financial statement user.

5. The computer readable storage media of any one of the preceding claims, wherein the operation of receiving at the server of the confirmation system from the client, via the communications network, permissions associated with the stored financial statement comprises receiving an identification of a financial statement user, a viewing permission comprising at least one of view, print, and download, and a time limit for the viewing permission.

6. The computer readable storage media of claim 1, wherein the operation of receiving at the server of the confirmation system, via the communications network, the financial statement having financial information associated with the client further comprises:
receiving at the server of the confirmation system, via the communications network, an identification of the client from an accountant associated with the client;
providing a notification from the server of the confirmation system to the client, via the communications network, in response to receiving the identification of the client;
receiving an approval at the server of the confirmation system from the client, via the communications network, said approval indicating acceptance by the client of the accountant from which the identification of the client was received to upload the financial statement to the server of the confirmation system,
providing a notification of the approval to the accountant from the server of the confirmation system via the communications network in response to receiving the approval at the server of the confirmation system, and
receiving the financial statement from the accountant at the server of the confirmation system via the communications network.

7. The computer readable storage media of claim 1, wherein the operation of receiving at the server of the confirmation system, via the communications network, the financial statement having financial information associated with the client comprises:
receiving at the server of the confirmation system, via the communications network, an identification of an accountant associated with the client from the client;
providing a notification from the server of the confirmation system to the identified accountant, via the communications network, in response to receiving the identification of the accountant from the client; and
receiving the financial statement from the accountant at the server of the confirmation system via the communications network.

8. The computer readable storage media of any one of the preceding claims, wherein:
the financial statement comprises at least one of a balance sheet, cash flow statement, a financial review, or a compilation of financial information; and
the financial statement user is one of a lending institution and an investor.

9. The computer readable storage media of any one of the preceding claims, wherein the computer executable instruction modules are further operable to perform the operational step of confirming, via the communications network, the financial information in the financial statements with a third party associated with the financial information.

10. The computer readable storage media of any one of the preceding claims, wherein:
the operational step of receiving at the server of the confirmation system, via the communications network, the financial statement having financial information associated with the client comprises receiving at the server of the confirmation system, via the communications network, the financial statement having financial information associated with the client from an accountant associated with the client; and
the computer executable instruction modules are further operable to perform the steps of
querying a database of licensed certified public accountants to determine whether the accountant is a currently licensed certified public accountant, and
providing the financial statement, via the communications network, to the identified lending institution in accordance with the permissions provided by the client as a function of determining that the accountant is a currently licensed certified public accountant.

11. A method of providing a financial statement associated with a client to a financial statement user, said method comprising the steps of:
receiving at a server of a confirmation system, via a communications network, a financial statement having financial information associated with the client;
storing the received financial statement in a computer database of the confirmation system;
receiving at the server of the confirmation system from the client, via the communications network, permissions associated with the stored financial statement; and
providing the stored financial statement from the computer database of the confirmation system to the financial statement user as a function of the permissions associated with the stored financial statement.

12. The method of claim 11, wherein:
the step of receiving at the server of the confirmation system, via the communications network, the financial statement having financial information associated with the client, comprises receiving at the server of the confirmation system, via the communications network, the financial statement having financial information associated with the client from an accountant associated with the client and receiving an identification of the client from the accountant at the server of the confirmation system; and
the method further comprises providing a notification from the server of the confirmation system to the client, via the communications network, in response to receiving the identification of the client at the server.

13. The method of claim 11, wherein the step of receiving at the server of the confirmation system, via the communications network, the financial statement having financial information associated with the client further comprises:
receiving at the server of the confirmation system, via the communications network, the financial statement having financial information associated with the client from the client;
receiving at the server of the confirmation system from the client, via the communications network, an identification of an accountant associated with the client;
providing a notification to the identified accountant from the server of the confirmation system via the communications network; and
receiving a confirmation of the financial information in the financial statement from the accountant at the server of the confirmation system via the communications network.

14. The method of claim 11, 12 or 13, wherein:
the step of receiving at the server of the confirmation system from the client, via the communications network, permissions associated with the stored financial statement further comprises receiving an identification of the financial statement user; and
the method further comprises providing a notification from the server of the confirmation system to the identified financial statement user via the communications network in response to receiving the permissions at the server of the confirmation system, said notification indicating the availability of the financial statement to the identified financial statement user.

15. The method of any one of claims 11 to 14, wherein:
the step of receiving at the server of the confirmation system from the client, via the communications network, permissions associated with the stored financial statement further comprises receiving an identification of a financial statement user, a viewing permission comprising at least one of view, print, and download, and a time limit for the viewing permission.

16. The method of claim 11, wherein:
the step of receiving at the server of the confirmation system, via the communications network, the financial statement having financial information associated with the client further comprises:
receiving at the server of the confirmation system, via the communications network, an identification of the client from an accountant associated with the client;
providing a notification from the server of the confirmation system to the client, via the communications network, in response to receiving the identification of the client;
receiving an approval at the server of the confirmation system from the client, via the communications network, said approval indicating acceptance by the client of the accountant from which the identification of the client was received to upload the financial statement to the server of the confirmation system;
providing a notification of the approval to the accountant from the server of the confirmation system via the communications network in response to receiving the approval at the server of the confirmation system; and
receiving the financial statement from the accountant at the server of the confirmation system via the communications network.

17. The method of claim 11, wherein:
the step of receiving at the server of the confirmation system, via the communications network, the financial statement having financial information associated with the client further comprises:
receiving at the server of the confirmation system, via the communications network, an identification of an accountant associated with the client from the client;
providing a notification from the server of the confirmation system to the identified accountant, via the communications network, in response to receiving the identification of the accountant from the client; and
receiving the financial statement from the accountant at the server of the confirmation system via the communications network.

18. The method of any one of claims 11 to 17, wherein:
the financial statement comprises at least one of a balance sheet, cash flow statement, a financial review, or a compilation of financial information; and
the financial statement user is one of a lending institution and an investor.

19. The method of any one of claims 11 to 18, further comprising:
confirming, via the communications network, the financial information in the financial statements with a third party associated with the financial information.

20. The method of any one of claims 11 to 19-, wherein:
the step of receiving at the server of the confirmation system, via the communications network, the financial statement having financial information associated with the client further comprises receiving at the server of the confirmation system, via the communications network, the financial statement having financial information associated with the client from an accountant associated with the client; and
the method further comprises:
querying a database of licensed certified public accountants to determine whether the accountant is a currently licensed certified public accountant; and
providing the financial statement, via the communications network, to the identified lending institution in accordance with the permissions provided by the client as a function of determining that the accountant is a currently licensed certified public accountant.
